# EUROPEAN PATENT APPLICATION

(11) **EP 3 272 761 A1**
(43) Date of publication of application: **24.01.2018**
(21) Application number: 16180681.5
(22) Date of filing: 22.07.2016
(51) Int. Cl.: C07F 17/00, B01J 31/38, C08F 4/76, C08G 61/00

(54) **METALL COMPLEX COMPRISING AMIDINE AND SUBSTITUTED CYCLOPENTADIENYL LIGANDS**

(71) Applicant: Arlanxeo Netherlands B.V., 6167 RD Geleen (NL)
(72) Inventor: SCOTT, Richard Thomas William, Brentwood Essex CM14 4PQ (GB); BERNARDO, Raffaele, 6221CK Maastricht (NL); VAN DE MOOSDIJK, John, 6415 TD Heerlen (NL); BERTHOUD, Alexandra, 3620 Neerharen (BE)
(74) Representative: Herbold, Matthias

(57) **Abstract**

The present invention relates to a metal complexes of formula (1), which is:

CyLMZ ₚ (1),
comprising a substituted cyclopentadienyl ligand (Cy) and an amidinate ligand (L), Cy is a substituted cyclopentadienyl ligand that contains the substituents R1, R2 and 3 additional methyl groups, whereof two of the methyl groups, provided they are vicinal may optionally be exchanged by an anellated C₆-C₁₀ aromatic ring, wherein
R1 means H, halogen or a C3-C20 substituent
R2 means a C1-C20 substituent
L is represented by either formula (2) or (2b). 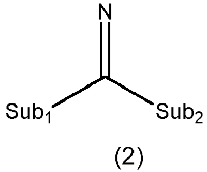 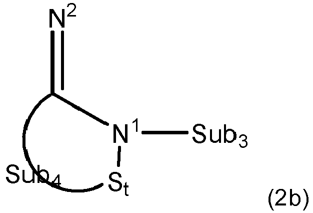 Further claims relate to a catalyst system containing said metal complex and a process for manufacturing polymers wherein said metal complex or catalyst system is used.

## Description

The present invention relates to a metal complex comprising a substituted cyclopentadienyl ligand and an amidinate ligand, a catalyst system containing said metal complex and a process for manufacturing polymers wherein said metal complex or catalyst system is used.

A process for the polymerization of at least one olefin having 2 to 8 carbon atoms in the presence of a polymerization catalyst component comprising an amidine ligand, an activator, and optionally a scavenger is known from WO2005090418. WO2005090418 discloses a process for the copolymerization of ethylene and at least one additional alpha olefin having from 3 to 8 carbon atoms. Characterized in that said process is a catalyst system for olefin polymerization comprising an organometallic complex of a group 4 metal comprising an amidine ligand; and an activator. WO2005090418 discloses also a process for the copolymerisation of ethylene, alpha olefin and one or more non conjugated dienes. It can be seen from WO2005090418 that the highest molecular weight (or intrinsic viscosity (IV)) polymer is made using the amidinato catalysts comprising the pentamethylcyclopentadienyl (Cp*) ligand. Whilst this ligand permits higher catalyst productivities and capability to prepare higher molecular weight polymer, it has some limitations in incorporating non-conjugated dienes into the polymer chain.

Surprisingly, by changing the substitution pattern of the pentamethylcyclopentadienyl (Cp*) ligand in a certain way, improved catalyst behaviours can be observed than for the catalysts known from WO2005090418. Such advantages can include in particular capability to prepare higher molecular weight polymer. The invented catalysts can also display better retention of catalyst productivity and capability to prepare high molecular weight polymer at elevated reactor temperatures which can make for a more efficient polymerization process. Other advantageous properties are the increased non-conjugated diene incorporations obtained with some embodiments of the present invention.
In EP2902420 also cyclic amidine ligand containing catalysts are mentioned, whereby those having unsymmetrical substitution pattern at the Cp ring, like compound 14, do show activities that are still improvable.

### Details of the invention

This objective is achieved with the metal complex of the formula (1)

CyLMZₚ (1),

wherein
M is a group 4 metal
Z is an anionic ligand,
p is number of 1 to 2, preferably 2,
Cy is a substituted cyclopentadienyl ligand that contains the substituents R1, R2 and 3 additional methyl groups, whereof two of the methyl groups, provided they are vicinal may optionally be exchanged by an anellated C₆-C₁₀ aromatic ring, wherein
   R1 means H, halogen or a C3-C20 substituent and
   R2 means a C1-C20 substituent,
L is an amidinate ligand of the formula (2) 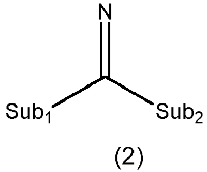 wherein the amidine-containing ligand is covalently bonded to the metal M via the imine nitrogen atom, and Sub1 is a substituent comprising a group 14 atom through which Sub1 is bonded to the imine carbon atom and Sub2 is a substituent comprising a heteroatom of group 15, through which Sub2 is bonded to the imine carbon atom or
L is an amidinate ligand L of the formula 2b 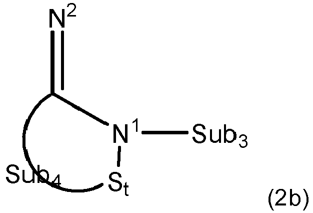 wherein the amidine-containing ligand is covalently bonded to the metal M via the imine nitrogen atom N²; S is a -CH₂- unit, and t is the integer number denoting the number of S and is in the range of 1-4, more preferably in the range of 1-2, most preferably is 1;
Sub3 is an alkyl, alkenyl, alkynyl with 4 to 20 carbon atoms or aromatic residue with 6 to 20 carbon atoms which are in each case unsubstituted or substituted with halogen, amido, silyl or aryl radicals;
Sub4 is an optionally substituted C2 unit in which the 2 carbon atoms may be sp² or sp³ hybridized.

In formula (2) the radicals Sub1 and Sub2 are understood to not form a ring together with carbon atom they are attached to. The respected ligand wherein Sub1 and Sub2 form a ring with the carbon atom they are attached to is represented by formula 2b.

### M

In a preferred embodiment the metal M of group 4 is titanium (Ti), zirconium (Zr) or hafnium (Hf), most preferably titanium.

### Z

In a preferred embodiment Z independently means a halogen atom, a C₁₋₁₀ alkyl group, a C₇₋₂₀ aralkyl group, a C₆₋₂₀ aryl group or a C₁₋₂₀ hydrocarbon-substituted amino group, and more preferably, a halogen atom and a C₁₋₁₀ alkyl group, most preferably Cl, F, Br, methyl, benzyl, methyltrimethylsilyl, phenyl, methoxyphenyl, dimethoxyphenyl, N,N-dimethylaminophenyl, bis-(N,N-dimethylamino)phenyl, fluorophenyl, difluorophenyl, trifluorophenyl, tetrafluorophenyl, perfluorophenyl, trialkylsilylphenyl, bis(trialkylsilyl)phenyl and tris(trialkylsilyl)phenyl. Most preferred are Cl or methyl. In case p is more than 1, means p = 2, the given meanings for Z are independent. Preferably p=2 and both Z are identical.

### L

A preferred embodiment of the invention relates to the metal complex of the formula (1) containing an amidine-containing ligand L of formula (2) wherein Sub1 is an aryl residue that may be substituted or unsubstituted. Typical examples for such a preferred amidinate-containing ligand are represented by formula 2 with Sub1 being a phenyl or substituted phenyl residue, preferably naphthyl, 2,6-dimethyl phenyl, 2,6-dichlorophenyl or 2,6-difluorophenyl.

A further embodiment of the invention relates to a metal complex of formula (1) having an L of the formula (2), wherein Sub1 is an alkyl residue. Typical examples for such a preferred Sub1 are linear, branched or cyclic alkyl residue with 1 to 20 carbon atoms, unsubstituted or substituted with halogen, amido, silyl or aryl radicals. Examples for such Sub1 are methyl, hexyl, cyclohexyl, iso-propyl, *tert*-butyl, benzyl, trifluoromethyl, 2,6-dimethyl benzyl, 2,6-difluoro benzyl and 2,6-difluorophenyl.

Another preferred embodiment of the present invention relates to a metal complex of the formula (1) having an L of the formula (2), wherein Sub2 is of the general formula -NR⁴R⁵ with R⁴ and R⁵ being individually selected from the group of aliphatic hydrocarbyl, halogenated aliphatic hydrocarbyl, aromatic hydrocarbyl and halogenated aromatic hydrocarbonyl residues. R⁴ optionally forming a heterocyclic structure with R⁵. Examples for Sub2 are dimethylamide, diisopropylamide and biscyclohexyl amide. Most preferred examples of the amidinate-containing ligand represented by the formula (2) are based on protio-amidines of the formula (2a)

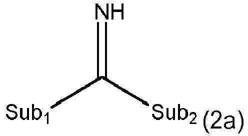

Examples include N,N-dimethylacetimidamide, N,N-diisopropylacetimidamide, N,N-dicyclohexylacetimidamide, N-(2,6-dimethylphenyl)-N-ethylacetimidamide, N,N-dimethylisobutyrimidamide, N,N-diisopropylisobutyrimidamide, N,N-dicyclohexylisobutyrimidamide, N-(2,6-dimethylphenyl)-N-ethylisobutyrimidamide, N,N-dimethylcyclohexanecarboximidamide, N,N-diisopropylcyclohexanecarboximidamide, N,N-dicyclohexylcyclohexanecarboximidamide, N-(2,6-dimethylphenyl)-N-ethylcyclo-hexanecarboximidamide, N,N-dimethylpivalimidamide, N,N-diisopropylpivalimidamide, N,N-dicyclohexylpivalimidamide, N-(2,6-dimethylphenyl)-N-ethylpivalimidamide, 2,2,2-trifluoro-N,N-dimethylacetimidamide, 2,2,2-trifluoro-N,N-diisopropylacetimidamide, N,N-dicyclohexyl-2,2,2-trifluoroacetimidamide, N-(2,6-dimethylphenyl)-N-ethyl-2,2,2-trifluoroacetimidamide, 2-(phenyl)-N,N-dimethylacetimidamide, 2-(phenyl)-N,N-diisopropylacetimidamide, N,N-dicyclohexyl-2-(phenyl)acetimidamide, 2-(phenyl)-N-(2,6-dimethylphenyl)-N-ethylacetimidamide, 2-(2,6-dimethylphenyl)-N,N-dimethylacetimidamide, 2-(2,6-dimethylphenyl)-N,N-diisopropylacetimidamide, N,N-dicyclohexyl-2-(2,6-dimethylphenyl)acetimidamide, N,2-bis(2,6-dimethylphenyl)-N-ethylacetimidamide, 2-(2,6-difluorophenyl)-N,N-dimethylacetimidamide, 2-(2,6-difluorophenyl)-N,N-diisopropylacetimidamide, N,N-dicyclohexyl-2-(2,6-difluorophenyl)acetimidamide, 2-(2,6-difluorophenyl)-N-(2,6-dimethylphenyl)-N-ethyl-acetimidamide, N,N-dimethylbenzimidamide, N,N-diisopropylbenzimidamide, N,N-dicyclohexylbenzimidamide, N-(2,6-dimethylphenyl)-N-ethylbenzimidamide, N,N-dimethyl-1-naphthimidamide, N,N-diisopropyl-1-naphthimidamide, N,N-dicyclohexyl-1-naphthimidamide, N-(2,6-dimethylphenyl)-N-ethyl-1-naphthimidamide, N,N,2,6-tetramethylbenzimidamide, N,N-diisopropyl-2,6-dimethylbenzimidamide, N,N-dicyclohexyl-2,6-dimethylbenzimidamide, N-(2,6-dimethylphenyl)-N-ethyl-2,6-dimethylbenzimidamide, 2,6-difluoro-N,N-dimethylbenzimidamide, 2,6-difluoro-N,N-diisopropylbenzimidamide, N,N-dicyclohexyl-2,6-difluorobenzimidamide, N-(2,6-dimethylphenyl)-N-ethyl-2,6-difluorobenzimidamide, 2,6-dichloro-N,N-dimethylbenzimidamide, 2,6-dichloro-N,N-diisopropylbenzimidamide, 2,6-dichloro-N,N-dicyclohexylbenzimidamide, 2,6-dichloro-N-(2,6-dimethylphenyl)-N-ethylbenzimidamide. Preferred examples are 2,6-difluoro-N,N-piperidinylbenzamidine, 2,4-difluoro-N,N-diisopropylbenz-imidamide (2,4-difluoro-N,N-diisopropylbenzamidine), 2,4,6-trifluoro-N,N-diisopropylbenzimidamide (2,4,6-trifluoro-N,N-diisopropylbenzamidine), 3,5-difluoro-N,N-diisopropylbenz-imidamide (3,5-difluoro-N,N-diisopropylbenzamidine), pentafluoro-N,N-diisopropylbenz-imidamide (pentafluoro-N,N-diisopropylbenzamidine), 2,6-difluoro-N,N-diisopropylbenz-imidamide (2,6-difluoro-N,N-diisopropylbenzamidine) and N,N-diisopropylbenzimidamide (N,N-diisopropylbenzamidine).

Examples for Sub3 are tert-butyl, pentyl, cyclopentyl, hexyl, cyclohexyl, heptyl, cycloheptyl, octyl, cyclooctyl, cyclododecyl, octadecyl, adamantyl, 1-butenyl and 2-butenyl, unsubstituted phenyl or substituted phenyl residue, preferably phenyl, naphthyl, 2,6-dimethylphenyl, 2,6-dichlorophenyl or 2,6-difluorophenyl.

A preferred embodiment of the invention relates to a metal complex of formula 1 wherein L of the formula 2b) has the general formula 2c) 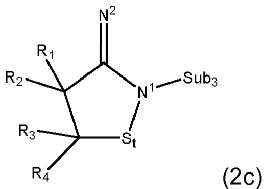 wherein R₁-R₄ are the same or different and each represents a hydrogen atom, a halogen atom, an optionally substituted C1-10 alkyl group or an optionally substituted C1-10 alkoxy group, and S, t and Sub3 have the above mentioned meaning, or L of the formula 2b) has the general formula 2d) 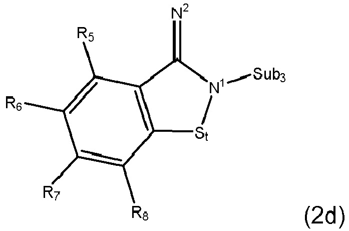 wherein R₅-R₈ are the same or different and each represents a hydrogen atom, a halogen atom, an optionally substituted C1-10 alkyl group, an optionally substituted C1-10 alkoxy group, or the adjacent R₅-R₈ may be linked to form an aromatic ring optionally substituted, preferably unsubstituted, and S, t and Sub3 have the above mentioned meaning. Typical examples for preferred R₅-R₈ are hydrogen and fluorine.

In a preferred embodiment, in which L has the general form 2c) with R₁-R₄ each representing a hydrogen atom or 2d) with R₅-R₈ each representing a hydrogen atom or R₅ being a fluorine atom and with Sub3 being tert-butyl, pentyl, cyclopentyl, hexyl, cyclohexyl, heptyl, cycloheptyl, octyl, cyclooctyl, cyclododecyl, octadecyl, adamantyl, 1-butenyl and 2-butenyl, phenyl, naphthyl, 2,6-dimethylphenyl, 2,6-dichlorophenyl or 2,6-difluorophenyl, S means CH₂ and t is 1.

### Cy

As used herein, the term cyclopentadienyl ligand is meant to broadly convey its conventional meaning, namely the substituted ligand having a five-membered carbon ring which is bonded to the metal via a π-type bonding usually in adopting η⁵-coordination to the metal.

In a preferred embodiment Cy is a substituted cyclopentadienyl ligand that contains the substituents R1, R2 and 3 additional methyl groups, wherein R1 and R2 have the above mentioned meanings.

In another preferred embodiment Cy is a substituted cyclopentadienyl ligand that contains the substituents R1, R2, one additional methyl group, and an anellated C₆-C₁₀ aromatic ring, wherein R1 and R2 have the above mentioned meanings. In particular the substituted cyclopentadienyl ligand is part of a cyclopentadienyl-type ligand. Non limiting examples of cyclopentadienyl-type ligands include cyclopentadienyl, indenyl or benzindenyl ligand, where its respective five membered ring is substituted by R1, R2 and one additional methyl group. Optionally the additional rings of the cyclopentadienyl type ligand may also contain further substituents.

R2 preliminary means aliphatic linear and branched radicals such as methyl, ethyl, n-propyl, allyl, iso-propyl, n-butyl, iso-butyl, sec-butyl, tert-butyl, n-pentyl, 3-pentyl, sec-pentyl, tert-pentyl, heptyl, octyl, nonyl, decyl cyclopropyl, cyclobutyl, cyclopentyl, cyclohexyl, phenylcyclohexyl, methylcyclohexyl, cycloheptyl, cyclooctyl, cyclodecyl, cyclododecyl, isopropyldodecyl, adamantyl, norbornyl, tricyclo[5.2.1.0]decyl or aryl radicals including phenyl, benzyl, methylphenyl, trimethylphenyl, cyclohexylphenyl, napthyl, butylphenyl, or butyldimethylphenyl.
The C₁-C₂₀ substituents as of R2 may also comprise heteroatomic substituents including halogens, in particular F, Cl and Br may be mentioned. Specific examples can include fluorophenyl, trifluoromethylphenyl and fluoromethyl, difluromethyl and trifluoromethyl. Furthermore group 15 and 16 elements such as nitrogen, phosphorous, oxygen and sulphur; for example, N,N-dimethylaminobenzyl, N,N-dimethylaminomethyl, methoxymethyl, diphenyl-phosphinomethyl, cyanoethyl and sulphur heterocylces.

R1 preferably means hydrogen, halogen, in particular F, Cl and Br and in particular R1 means C₃-C₂₀ substituent such as aliphatic linear and branched radicals such as n-propyl, iso-propyl, allyl, n-butyl, iso-butyl, sec-butyl, tert-butyl, n-pentyl, 3-pentyl, sec-pentyl, tert-pentyl, heptyl, octyl, nonyl, decyl cyclopropyl, cyclobutyl, cyclopentyl, cyclohexyl, phenylcyclohexyl, methylcyclohexyl, cycloheptyl, cyclooctyl, cyclodecyl, cyclododecyl, isopropyldodecyl, adamantyl, norbornyl, tricyclo[5.2.1.0]decyl or aryl radicals including phenyl, benzyl, methylphenyl, trimethylphenyl, cyclohexylphenyl, napthyl, butylphenyl, and butyldimethylphenyl.

The C₃-C₂₀ as of R1 substituents may also being substituted by heteroatomic substituents including halogens, in particular F, Cl and Br. Specific examples can include fluorophenyl, trifluoromethylphenyl and fluoromethyl, difluromethyl and trifluoromethyl, furthermore group 15 and 16 elements such as nitrogen, phosphorous, oxygen and sulphur; for example, N,N-dimethylaminobenzyl, N,N-dimethylaminomethyl, methoxymethyl, diphenyl-phosphinomethyl, cyanoethyl and sulphur heterocycles.

In a preferred embodiment R1 means a C₃ to C₁₀ substituent and R2 means methyl. More preferably R^{x} means methyl and R1 means a C₃ to C₆ radical .Most preferably R1 means iso-propyl, cyclohexyl, allyl or a linear or branched butyl isomer, in particular n-butyl, s-butyl, iso-butyl or t-butyl and R2 means methyl.

In a preferred embodiment the catalyst system according to the present invention contains a metal complex of formula (1) of the present invention, wherein
- M: is Ti,
- Z: is selected from the group consisting of chlorine and C₁-C₄-alkyl,
- p: is 2
Cy is substituted with four methyl groups one of which is from R2 = methyl and R1 means a hydrogen or a C₃-C₆ aliphatic substituent, in particular hydrogen, iso-propyl, cyclohexyl, n-butyl, s-butyl, iso-butyl or t-butyl, allyl and
- L: means N,N-diisopropylbenzamidinate or 2,6-difluoro-N,N-diisopropylbenzamidinate.

### A

The metal complex may in addition be coordinated with a neutral Lewis basic ligand A wherein the number of said ligands may be "n" which is in the range of 0 to the amount that specifies the 18-electron rule. Preferred is a metal complex of the formula (1) wherein A is an ether, a thioether, a amine, a tertiary phosphane, an imine, a nitrile, an isonitrile, or a bi- or oligodentate donor.

If more than one ligand A is present they may have different meanings.

The number "n" of neutral ligands in the metal complex of formula (1) may range from 0 to the amount that satisfies the 18-electron rule, as known in the art. Preferably from 0 to 1. In the preferred embodiment the number "n" of neutral ligands A is 0.

Suitable ethers are diethyl ether, dipropyl ether, diisopropyl ether, dibutyl ether, dihexyl ether, anisole, phenetole, butyl phenyl ether, methoxytoluene, benzyl ethyl ether, diphenyl ether, dibenzyl ether, veratrole, 2-epoxypropane, dioxane, trioxane, furan, 2,5-dimethylfuran, tetrahydrofuran, tetrahydropyrane, 1,2-diethoxyethane, 1,2-dibutoxyethane, and crown ethers. Suitable thioethers are dimethyl sulfide, diethyl sulfide, thiophene, and tetrahydrothiophene. Suitable amines such as methylamine, dimethylamine, trimethylamine, ethylamine, diethylamine, triethylamine, propylamine, diisopropylamine, butylamine, isobutylamine, dibutylamine, tributylamine, pentylamine, dipentylamine, tripentylamine, 2-ethylhexylamine, allylamine, aniline, N-methylaniline, N,N-dimethylaniline, N,N-diethylaniline, toluidine, cyclohexylamine, dicyclohexylamine, pyrrole, piperidine, pyridine, picoline, 2,4-lutidine, 2,6-lutidine, 2,6-di(t-butyl) pyridine, quinoline, and isoquinoline, preferably tertiary amines such as trialkylamines, pyridine, bipyridine, tetramethylethylenediamine (TMEDA), and (-)-sparteine). Suitable tertiary phosphanes are triphenylphoshine and trialkylphosphanes. Suitable of imines are ketimines, guanidines, iminoimidazolidines, phosphinimines and amidines. Suitable bidentate ligands are diimines, alkyl or aryldiphoshanes, dimethoxyethane. Suitable oligodentate ligands are triimines (such as tris(pyrazolyl)alkanes), cyclic multidentate ligands comprising heteroatoms of group 13-17, including crown ethers optionally having heteroatoms of group 13-17, azo-crown ethers optionally having heteroatoms of group 13-17, phospha-crown ethers optionally having heteroatoms of group 13-17, crown ethers having combinations of heteroatoms of group 15-16 optionally having heteroatoms of group 13-17 and crown ethers containing heteroatoms of group 14-17 or combinations thereof.

Suitable nitriles are those of the formula, R⁷C=N, where R⁷ is individually selected from the group of aliphatic hydrocarbyl, halogenated aliphatic hydrocarbyl, aromatic hydrocarbyl and halogenated aromatic hydrocarbonyl residues. Preferred nitriles are acetonitrile, acrylonitrile, cyclohexanedintirile, benzonitrile, pentafluorbenzonitrile, 2,6-difluorobenzonitrile, 2,6-dichlorobenzonitrile, 2,6-dibromobenzonitrile, 4-fluoro-2-trifluoromethyl benzonitrile, 3-pyridinecarbonitrile
Suitable isonitriles are those of the formula, R²N≡C, where R¹ is individually selected from the group of aliphatic hydrocarbyl, halogenated aliphatic hydrocarbyl, aromatic hydrocarbyl and halogenated aromatic hydrocarbonyl residues. Preferred isonitriles are tert-butyl isocyanide (^{t}BuNC), ethyl isocyanoacetate, p-toluenesulfonylmethyl isocyanide and cyclohexyl isocyanide preferably tert-butyl isonitrile (^{t}BuNC).

A preferred neutral Lewis basic ligand A is tetrahydrofuran (THF).

### Process

The invention further relates to a process for the manufacturing of a metal complex of formula (1) according to the present invention wherein a metal complex of the formula (4)

CyMZₚ₊₁ (4)

wherein the radicals Cy, M, p and n have the above given meanings and Z means halogen, in particular Cl, Br, or F, is reacted with an amidine of the formula LH or its hydrohalogen acid salt LH·HZ wherein L has the above mentioned meaning and Z means halogen, in particular Cl, Br, or F.

Optionally the complex of formula (4) is first reacted with a neutral Lewis base A to form the metal complex of the formula CyMZp₊₁(A)ₙ and subsequently reacted with an amidine of the formula LH or its hydrohalogen acid salt LH·HZ as mentioned above.

The reaction with LH or its hydrohalogen acid salt LH·HZ is preferably carried out in a suitable solvent and preferably in the presence of suitable base.

Suitable bases include organic bases, inorganic bases, and organometallics. Typical examples for suitable bases are triethylamine and methylmagnesium bromide/chloride.

A suitable solvent is preferably an aromatic or aliphatic hydrocarbon solvent. The reaction is preferably carried out at ambient pressure, preferably at 0.9 bar to 1.1 bar, and a temperature in the range of 0 to 150 °C. More preferably, in the range 20 to 60 °C.

The molar ratio of LH or LH·HZ to CyMZₚ₊₁ (4) or CyMZₚ₊₁(A)ₙ is preferably in the range of 0.8 to 1.5, most preferably the ratio is 0.95 to 1.050. The molar ratio of suitable base to LH, LH·HZ is preferably in the range of 1 to 5, more preferably the ratio is 2 to 4.

The metal complex of formula (1) wherein Z means a halogen atom may be isolated using techniques well known to those skilled in the art by filtration, to remove any inorganic or organic salt byproducts, followed by removal of volatiles under reduced pressure or by crystallization with subsequent removal of the mother liquor by filtration or by decantation. Optionally the crude mixture may be employed in polymerization reactions without further work-up or purification steps.

Techniques well-known to those skilled in the art are used to obtain further a metal complex of the formula 1 wherein Z means a C1-10 alkyl group, a C7-20 aralkyl group, a C6-20 aryl group from the metal complex of formula (1) wherein Z means a halogen atom by using suitable hydrocarbylating reagents for the salt metathesis reaction preferably in a suitable solvent. Preferably, Grignard reagents or organolithium reagents are employed as alkylating agents. The molar ratio of hydrocarbylating agent, in particular the alkylating agent to the metal complex of formula (1) is preferably in the range of 1.8 to 5.0, more preferably in the range 2.0-2.5. The alkylating agent is preferably methyl magnesium chloride or methyl lithium. This may be carried out at ambient pressure, preferably at 0.9 bar to 1.1 bar and a temperature in the range of 0 to 90 °C. Preferably in the range 0 to 30 °C.

Alternatively, a metal complex of the formula (1) wherein Z means a C1-10 alkyl group, a C7-20 aralkyl group, a C6-20 aryl group may be prepared by combining LH or LH·HZ with CyMZₚ₊₁ (4) or CyMZₚ₊₁(A)ₙ wherein Z means a C1-10 alkyl group, a C7-20 aralkyl group, a C6-20 aryl group and A, p and n have the above mentioned meaning in a suitable solvent. Suitable solvents preferably are aromatic or aliphatic hydrocarbon solvents. This may be carried out at ambient pressure, preferably at 0.9 bar to 1.1 bar, preferably at temperatures in the range of 0 to 120°C. More preferably in the range 10 to 50 °C (Z = Me) and 70 to 110 °C (Z = CH₂Ph).

The invention further provides a catalyst system comprising
a) a metal complex of the formula (1) according to the present invention and
b) an activator and
c) optionally a scavenger.

The preferred metal complex of compound a) is mentioned above. A scavenger c) is a compound that reacts with impurities present in the process of the invention, which are poisonous to the catalyst.

In a preferred embodiment of the present invention the scavenger c) as of the catalyst system is a hydrocarbyl of a metal or metalloid of group 1-13 or its reaction products with at least one sterically hindered compound containing a group 15 or 16 atom. Preferably, the group 15 or 16 atom of the sterically hindered compound bears a proton. Examples of these sterically hindered compounds are *tert*-butanol, *iso*propanol, triphenylcarbinol, 2,6-di-*tert*-butylphenol, 4-methyl-2,6-di-*tert*-butylphenol, 4-ethyl-2,6-di-*tert*-butylphenol, 2,6-di-*tert*-butylanilin, 4-methyl-2,6-di-*tert*-butylanilin, 4-ethyl-2,6-di-*tert*-butylanilin, HMDS (hexamethyldisilazane), diisopropylamine, di-*tert-*butylamine, diphenylamine and the like. Some non-limiting examples of scavengers are butyllithium including its isomers, dihydrocarbylmagnesium, and hydrocarbylzinc and their reaction products with a sterically hindered compound or an acid, such as HF, HCl, HBr, Hl. Furthermore organoaluminium compounds (E) as defined below can be used as activator b), in particular hydrocarbylaluminoxanes like methylaluminoxane (MAO).

Activators of the component b) for single-site catalysts are fairly well known in the art. These activators often comprise a group 13 atom, such as boron or aluminium. Examples of these activators are described in Chem. Rev., 2000, 100, 1391 by E. Y-X. Chen and T.J. Marks. A preferred activator b) is a borane (C1), a borate (C2, C3) or an organoaluminum compound (E) like aluminoxane, such as methyl aluminoxane (MAO). The activator for activation preferably is any boron compound of the following (C1) to (C3) and/or an organoaluminum compound (E). The organoaluminum compound (E) may be employed as a scavenger and/or an activator.
(C1) A boron compound represented by the general formula BQ₁Q₂Q₃
(C2) A boron compound represented by the general formula G(BQ₁Q₂Q₃Q₄)
(C3) A boron compound represented by the general formula (J-H)(BQ₁Q₂Q₃Q₄)

Q₁ to Q₃ are a halogen atom, hydrocarbon group, halogenated hydrocarbon group, substituted silyl group, alkoxy group or di-substituted amino group, and they may be the same or different. Q₁ to Q₃ are preferably a halogen atom, hydrocarbon group having 1 to 20 carbon atoms, halogenated hydrocarbon group having 1 to 20 carbon atoms, substituted silyl group having 1 to 20 carbon atoms, alkoxy group having 1 to 20 carbon atoms or amino group having 2 to 20 carbon atoms, and more preferably, Q₁ to Q₃ are a halogen atom, hydrocarbon group having 1 to 20 carbon atoms, or halogenated hydrocarbon group having 1 to 20 carbon atoms. Further preferably, Q₁ to Q₃ are a fluorinated hydrocarbon group having 1 to 20 carbon atoms containing at least one fluorine atom, and particularly preferably, Q₁ to Q₃ are a fluorinated aryl group having 6 to 20 carbon atoms containing at least one fluorine atom. Q₄ has the same meaning as one of the radicals Q₁ to Q₃ and Q₁ to Q₄ may be the same or different. G is an inorganic or organic cation, J is a neutral Lewis base, and (J-H) is a Bronsted acid.

In the boron compound (C1) represented by the general formula BQ₁Q₂Q₃, B is a boron atom in the trivalent valence state, Q₁ to Q₃ have the above mentioned meanings and may be the same or different.

Specific examples of the compound (C1) include tris(pentafluorophenyl)borane, tris(2,3,5,6-tetrafluorophenyl)borane, tris(2,3,4,5-tetrafluorophenyl)borane, tris(3,4,5-trifluorophenyl)borane, tris(2,3,4-trifluorophenyl)borane, phenyl-bis(pentafluoro-phenyl)borane and the like, and tris(pentafluorophenyl)borane is most preferable.

In the boron compound (C2) represented by the general formula G(BQ₁Q₂Q₃Q₄), G⁺ is an inorganic or organic cation, B is a boron atom in the trivalent valence state, and Q₁ to Q₄ are as defined for Q₁ to Q₃ in the above-mentioned (C1).
Specific examples of the inorganic cation G in a compound represented by the general formula G(BQ₁Q₂Q₃Q₄) include a ferrocenium cation, alkyl-substituted ferrocenium cation, silver cation and the like, specific examples of the organic cation G thereof include a triphenylmethyl cation and the like. G is preferably a carbenium cation, and particularly preferably a triphenylmethyl cation.
Examples of (B Q₁Q₂Q₃Q₄) include tetrakis(pentafluorophenyl)borate, tetrakis(2,3,5,6-tetrafluorophenyl)borate, tetrakis(2,3,4,5-tetrafluorophenyl)borate, tetrakis(3,4,5-trifluorophenyl)borate, teterakis(2,3,4-trifluorophenyl)borate, phenyltris(pentafluorophenyl) borate, tetrakis(3,5-bistrifluoromethylphenyl)borate and the like.
As specific combination of them, ferroceniumtetrakis(pentafluorophenyl)borate, 1,1'-dimethylferroceniumtetrakis(pentafluorophenyl)borate, silvertetrakis(pentafluorophenyl)borate, triphenylmethyltetrakis-(pentafluorophenyl)borate, triphenylmethyltetrakis(3,5-bistrifluoromethylphenyl)borate and the like are listed, and triphenylmethyltetrakis(pentafluorophenyl)borate is most preferable.

In the boron compound (C3) represented by the general formula (J-H)⁺(BQ₁Q₂Q₃Q₄), J is a neutral Lewis base, (J-H) is a Bronsted acid, B is a boron atom in the trivalent valence state, and Q₁ to Q₄ are as defined for Q₁ to Q₄ in the above-mentioned Lewis acid (C1).

Specific examples of the Bronsted acid (J-H)⁺ in a compound represented by the general formula (J-H)(BQ₁Q₂Q₃Q₄) include a trialkyl-substituted ammonium, N,N-dialkylanilinium, dialkylammonium, triaryl phosphonium and the like, and as the (B Q₁Q₂Q₃Q₄), the same compounds as described above are listed. As specific combination of them, there are listed triethylammoniumtetrakis(pentafluoro-phenyl)-borate, tripropylammoniumtetrakis(pentafluorophenyl)borate, tri(n-butyl)ammoniumtetrakis(pentafluorophenyl)borate, tri(n-butyl)ammoniumtetrakis(3,5-bistrifluoromethylphenyl)borate, N,N-dimethyl-aniliniumtetrakis(pentafluoro-phenyl)borate, N,N-diethylaniliniumtetrakis(penta-fluorophenyl)borate, N,N-2,4,6-pentamethylaniliniumtetrakis(pentafluorophenyl)borate, N,N-dimethylanilinium-tetrakis(3,5-bistrifluoromethylphenyl)borate, diisopropyl-ammoniumtetrakis(penta-fluorophenyl)borate, dicyclohexylammoniumtetrakis-(pentafluorophenyl)borate, triphenylphosphoniumtetrakis(pentafluorophenyl)borate, tri(methylphenyl)phosphoniumtetrakis(pentafluorophenyl)borate, tri(dimethylphenyl)-phosphonium-tetrakis(pentafluorophenyl)borate and the like, and tri(n-butyl)ammonium-tetrakis(pentafluorophenyl)borate or N,N-dimethylaniliniumtetrakis(pentafluoro-phenyl)borate is most preferable.

The molar ratio of metal complex:activating cocatalyst C1-C3 employed preferably ranges from 1:10 to 1:2, more preferably ranges from 1:5 to 1:2, and most preferably from 1:3 to 1:2.

The organoaluminum compound (E) is an aluminum compound having a carbon-aluminum bond, and one or more of aluminum compounds selected from the following (E1) to (E3) are preferable.
(E1) An organoaluminum compound represented by the general formula T¹ₐAlZ₃₋ₐ
(E2) A cyclic aluminoxane having a structure represented by the general formula {-Al(T²)-O-}_{b}
(E3) Linear aluminoxane having a structure represented by the general formula T³{-Al(T³)-O-}_{c}AlT³₂
(wherein, each of T¹, T² and T³ is hydrocarbon group, and all T¹, all T² and all T³ may be the same or different respectively. Z represents a hydrogen atom or halogen atom, and all Z's may be the same or different. 'a' represents a number satisfying 0<a≤3, 'b' is an integer of 2 or more, and 'c' is an integer of 1 or more.).

The hydrocarbon group in E1, E2 or E3 is preferably a hydrocarbon group having 1 to 8 carbon atoms, and more preferably an alkyl group.

Specific examples of the organoaluminum compound (E1) represented by the general formula T¹ₐAlZ₃₋ₐ include trialkylaluminums such as trimethylaluminum, triethyl-aluminum, tripropylaluminum, triisobutylaluminum, trihexylaluminum and the like; dialkylaluminum chlorides such as dimethylaluminum chloride, diethylaluminum chloride, dipropylaluminum chloride, diisobutylaluminum chloride, dihexylaluminum chloride and the like; alkylaluminum dichlorides such as methylaluminum dichloride, ethylaluminum dichloride, propylaluminum dichloride, isobutylaluminum dichloride, hexylaluminum dichloride and the like; dialkylaluminum hydrides such as dimethylaluminum hydride, diethylaluminum hydride, dipropylaluminum hydride, diisobutylaluminum hydride, dihexylaluminum hydride and the like; and so forth.
A preferred activator-scavenger combination is [CPh₃][B(C₆F₅)₄]/ MAO.

Specific examples of cyclic aluminoxane E2 having a structure represented by the general formula {-Al(T²)-O-}_{b} and the linear aluminoxane E3 having a structure represented by the general formula T³F-Al(T³)-O-}_{c}AlT³₂ include alkyl groups such as a methyl group, ethyl group, n-propyl group, isopropyl group, n-butyl group, isobutyl group, n-pentyl group, neopentyl group and the like. b is an integer of 2 or more, c is an integer of 1 or more. Preferably, T² and T³ represent a methyl group or isobutyl group, and b is 2 to 40 and c is 1 to 40.

The above-described aluminoxane is made by various methods. This method is not particularly restricted, and the aluminoxane may be produced according to a known method. For example, a solution prepared by dissolving a trialkylaluminum (for example, trimethylaluminum and the like) in a suitable organic solvent (benzene, an aliphatic hydrocarbon or the like) is allowed to contact with water to produce aluminoxane. Further, there is exemplified a method in which the trialkylaluminum (for example, trimethylaluminum and the like) is allowed to contact with a metal salt containing crystal water (for example, copper sulfate hydrate and the like) to produce aluminoxane.

The molar ratio of metal complex (1) : scavenger c) employed preferably ranges from 0.1 : 1000 to 0.1 : 10, more preferably ranges from 0.1 : 1000 to 0.1 : 300, and most preferably from 0.14 : 600 to 0.14 : 400.

### Polymerization

The invention further provides a process for the polymerization of a polymer by polymerizing at least one olefinic monomer comprising contacting said monomer with a metal complex of formula (1).

The metal complex of the formula (1) may also be used as a supported catalyst which comprises a organometallic compound of formula (1), a supporting material and optionally the activator (b) and/or a scavenger (c).

A supporting material is defined as an inorganic or organic compound that does not dissolve in the inert hydrocarbon solvent in which the process of the invention is carried out. Suitable inorganic supports include silica, magnesium halides, such as MgF₂, MgCl₂, MgBr₂, Mgl₂, zeolites, and alumina. Suitable organic supports include polymers. Some non-limiting examples of polymeric supports are polyolefins such as polystryrene, polypropylene and polyethylene, polycondensates such as polyamides and polyesters and combinations thereof.

The preferred process for polymerization is generally concluded by consulting at least one olefinic monomer with the metal complex of the formula (1) or the catalyst system according to the present invention in the gas phase, in slurry, or in solution in an inert solvent preferable a hydrocarbon solvent. Suitable solvents are in the gas phase, in slurry, or in solution in an inert solvent preferable a hydrocarbon solvent. Suitable solvents are a C₅₋₁₂ hydrocarbon such as pentane, hexane, heptane, octane, isomers and mixtures thereof, cyclohexane, methylcyclohexane, pentamethyl heptane and hydrogenated naphtha. The process of the invention may be conducted at temperatures from 10 to 250 °C, depending on the product being made.

### Monomer Definition

An olefinic monomer is understood to be a molecule containing at least one polymerizable double bond.

Suitable olefinic monomers are C₂₋₂₀ olefins. Preferred monomers include ethylene and C₃₋₁₂ alpha olefins which are unsubstituted or substituted by up to two C₁₋₆ alkyl radicals, C₈₋₁₂ vinyl aromatic monomers which are unsubstituted or substituted by up to two substituents selected from the group consisting of C₁₋₄ alkyl radicals, and C₄₋₁₂ straight chained or cyclic hydrocarbyl radicals which are unsubstituted or substituted by a C₁₋₄ alkyl radical. Illustrative non-limiting examples of such a-olefins are propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene and 12-ethyl-1-tetradecene. These a-olefins may be used in combination.

The monomer may also be a polyene comprising at least two double bonds. The double bonds may be conjugated or non-conjugated in chains, ring systems or combinations thereof, and they may be endocyclic and/or exocyclic and may have different amounts and types of substituents. This means that the polyene may comprise at least one aliphatic, alicyclic or aromatic group, or combinations thereof.

Suitable polyenes include aliphatic polyenes and alicyclic polyenes. More specifically, aliphatic polyenes can be mentioned, such as 1,4-hexadiene, 3-methyl-1,4-hexadiene, 4-methyl-1,4-hexadiene, 5-methyl-1,4-hexadiene, 4-ethyl-1,4-hexadiene, 1,5-hexadiene, 3-methyl-1,5-hexadiene, 3,3-dimethyl-1,4-hexadiene, 5-methyl-1,4-heptadiene, 5-ethyl-1,4-heptadiene, 5-methyl-1,5-heptadiene, 6-methyl-1,5-heptadiene, 5-ethyl-1,5-heptadiene, 1,6-heptadiene, 1,6-octadiene, 4-methyl-1,4-octadiene, 5-methyl-1,4-octadiene, 4-ethyl-1,4-octadiene, 5-ethyl-1,4-octadiene, 5-methyl-1,5-octadiene, 6-methyl-1,5-octadiene, 5-ethyl-1,5-octadiene, 6-ethyl-1,5-octadiene, 1,6-octadiene, 6-methyl-1,6-octadiene, 7-methyl-1,6-octadiene, 6-ethyl-1,6-octadiene, 6-propyl-1,6-octadiene, 6-butyl-1,6-octadiene, 1,7-octadiene, 4-methyl-1,4-nonadiene, 5-methyl-1,4-nonadiene, 4-ethyl-1,4-nonadiene, 5-ethyl-1,4-nonadiene, 5-methyl-1,5-nonadiene, 6-methyl-1,5-nonadiene, 5-ethyl-1,5-nonadiene, 6-ethyl-1,5-nonadiene, 6-methyl-1,6-nonadiene, 7-methyl-1,6-nonadiene, 6-ethyl-1,6-nonadiene, 7-ethyl-1,6-nonadiene, 7-methyl-1,7-nonadiene, 8-methyl-1,7-nonadiene, 7-ethyl-1,7-nonadiene, 1,8-nonadiene, 5-methyl-1,4-decadiene, 5-ethyl-1,4-decadiene, 5-methyl-1,5-decadiene, 6-methyl-1,5-decadiene, 5-ethyl-1,5-decadiene, 6-ethyl-1,5-decadiene, 6-methyl-1,6-decadiene, 6-ethyl-1,6-decadiene, 7-methyl-1,6-decadiene, 7-ethyl-1,6-decadiene, 7-methyl-1,7-decadiene, 8-methyl-1,7-decadiene, 7-ethyl-1,7-decadiene, 8-ethyl-1,7-decadiene, 8-methyl-1,8-decadiene, 9-methyl-1,8-decadiene, 8-ethyl-1,8-decadiene, 1,9-decadiene, 1,5,9-decatriene, 6-methyl-1,6-undecadiene, 9-methyl-1,8-undecadiene and 1,13-tetradecadiene, 1,3-butadiene, isoprene.

Alicyclic polyenes may consist of at least one cyclic fragment. Examples of these alicyclic polyenes are vinylcyclohexene, vinylnorbornene, ethylidene norbornene, dicyclopentadiene, cyclooctadiene, 2,5-norbornadiene, 1,4-divinylcyclohexane, 1,3-divinylcyclohexane, 1,3-divinylcyclopentane, 1,5-divinylcyclooctane, 1-allyl-4-vinylcyclohexane, 1,4-diallylcyclohexane, 1-allyl-5-vinylcycloocatane, 1,5-diallylcyclooctane, 1-allyl-4-isopropenylcyclohexane, 1-isopropenyl-4-vinylcyclohexane and 1-isopropenyl-3-vinylcyclopentane, and 1,4-cyclohexadiene. Preferred polyenes are polyenes having at least one endocyclic double bond and optionally at least one exocyclic double bond, such as 5-methylene-2-norbornene and 5-ethylidene-2-norbornene, 5-vinylnorbornene, and 2,5-norbornadiene, dicyclopentadiene and vinylcyclohexene.

Examples of aromatic polyenes are divinylbenzene (including its isomers), trivinylbenzene (including its isomers) and vinylisopropenylbenzene (including its isomers).

All of the above-mentioned monomers may be further substituted with at least one group comprising a heteroatom of group 13-17, or combinations thereof.

Homopolymers, copolymers and copolymers on the basis of 3 or more of the above-mentioned olefinic monomers and also blends thereof can be prepared with the process of the present invention.

In a preferred embodiment copolymers on the basis of ethylene, at least one C₃₋₁₂ alpha olefin, preferably propylene and at least one non-conjugated diene, preferably a diene selected from the group consisting of 5-methylene-2-norbornene 5-ethylidene-2-norbornene, 5-vinylnorbornene, 2,5-norbornadiene, dicyclopentadiene (DCPD) and vinylcyclohexene, preferably from the group consisting of 5-ethylidene-2-norbornene and 5-vinylnorbornene are made with metal complex of the present invention.

The invention further relates to polymers obtainable with the metal complex of the present invention or the catalyst system of the present invention. Below, the invention will be elucidated on the basis of the following examples and comparative experiments, without being limited thereto.

### Examples

### Test methods.

**Size Exclusion Chromatography with IR detector (SEC-IR)**

| | |
|---|---|
| Equipment: | Freeslate Rapid GPC system with single detection (Infrared detector IR4 Standalone by Polymer Char) |
| Columns: | PLGel Mixed-B 10µm (x3 300 x 7.5mm columns) |
| Calibration: | Calibration with linear polystyrene (PS) standards (molecular weight ca. 30-3000 kg/mol) |
| Temperature: | 160 °C |
| Flow: | 1.5 ml/min |
| Injection volume: | 125 µl |
| Solvent/eluent: | Distilled 1,2,4-trichlorobenzene with 0.4 g/l of BHT stabilizer |
| Sample preparation: | Dissolving for 2 hours at approx. 160 °C Filtration through 2 and 0.5 micron sintered glass filter Sample concentration 1.5 mg/ml |

NMR (¹H, 300 MHz, ¹³C 75.4 MHz, ¹⁹F 282 MHz) spectra were measured on a Bruker Avance 300 spectrometer.

Fourier transformation infrared spectroscopy (FT-IR), was used to determine the composition of the copolymers according to the method that is known in the art. The FT-IR measurement gives the composition of the various monomers in weight percents relative to the total composition.

Composition was determined using mid-range FT-IR spectroscopy.

### Part I: Synthesis of ligands and compounds

### General.

All manipulations were carried out using standard Schlenk line or dry-box techniques under an atmosphere of argon or dinitrogen. Solvents were degassed by sparging with dinitrogen and dried by passing through a column of the appropriate drying agent. Toluene was refluxed over sodium and distilled. Deuterated solvents were dried over potassium (C₆D₆) or P₂O₅ (CDCl₃ and CD₂Cl₂), distilled under reduced pressure and stored under dinitrogen in Teflon valve ampoules. NMR samples were prepared under dinitrogen in 5 mm Wilmad 507-PP tubes fitted with J. Young Teflon valves. ¹H and ¹³C-{¹H} spectra were recorded at ambient temperature and referenced internally to residual protio-solvent (¹H) or solvent (¹³C) resonances, and are reported relative to tetramethylsilane (d = 0 ppm). Chemical shifts are quoted in δ (ppm) and coupling constants in Hz.

### Synthesis of ligands and literature compounds

### Ligand A (HNC(2,6-C₆H₃F₂)(NC₅H₁₀))

To a piperidine (5 mL, 50.6 mmol) solution in toluene (20 mL) was added MeMgCl (3.0 M in THF, 16.9 mL, 50.6 mmol). The solution was heated to 50 °C, for two hours before allowing to cool to room temperature and transferring using a cannula to a solution of 2,6-difluorobenzonitrile (7.03 g, 50.6 mmol) in toluene (20 mL). The solution was stirred for 16 h at room temperature after which time the reaction was quenched by addition of water (1 mL). After stirring for an hour, anhydrous sodium sulfate was added and the solution was then filtered to remove salts. The clear solution was then washed with brine (2 x 40 mL) before removal of the volatiles under reduced pressure to yield a viscous yellow oil. This was then diluted with another portion of hexanes (15 mL) and placed at -20 °C for two days resulting in crystallization of the desired product. Yield = 8.7 g (77 %). ¹H NMR (300 MHz) (CDCl₃) δ (ppm): 7.24 (m, 1 H, Ar); 6.86 (m, 2 H, Ar); 6.06 (m, 1 H, NH), 3.33 (br m, 4 H, NCH₂), 1.53 (br m, 6 H, CH₂CH₂CH₂) ppm. ¹⁹F-NMR (282 MHz, CDCl₃) δ: -113.30 ppm.

**Ligand B** (HNC(2,6-C₆H₃F₂)(ⁱPr₂N)) was prepared as described in WO 2005/090418.

### Ligand C (2-(cyclohexyl)-2,3-dihydro-isoindol-1-ylideneamine)

2-(Bromomethyl)benzonitrile (4.90 g, 25.0 mmol) was dissolved in toluene (10 mL) and cyclohexylamine (2.48 g, 25.0 mmol), dissolved in toluene (10 mL), was added dropwise within 20 min. It was stirred at 50 °C overnight. The solvent was evaporated to approx. 10 mL and diethylether (20 mL) was added. It was filtered off, washed with diethylether (2x20 mL) and dried under reduced pressure to yield the product as a white solid (6.71 g, 22.8 mmol, 91%).
The hydrobromide salt of the ligand was isolated as a powder which was characterized by ¹H NMR (300 MHz) (CDCl₃) δ (ppm): 1.10 - 2.14 (10H, m); 4.67 (2H, s); 4.95 (1H, m); 7.51 (1 H, d); 7.58 - 7.68 (2H, m); 9.05 (1 H,d); 9.81 (1 H, s); 10.25 (1 H, s).
The neutral protio ligand G was obtained by neutralization of a dichloromethane solution the hydrobromide salt using 4 M NaOH (aq), removal of the aqueous phase and evaporation of the volatiles under reduced pressure.

**Ligand D** (HNC(Ph)(ⁱPr₂N)) was prepared as described in WO 2005/090418.

### Ligand E (HNC(3,5-C₆H₃F₂)(ⁱPr₂N))

Synthesized according to the procedure described for Ligand B in a yield of 704 mg (58 %). ¹H-NMR (300 MHz, CDCl₃) δ: 6.84-6.73 (3H, m, ArH); 5.95 (1 H, br. s., NH); 3.57 (2H, septet., *J*=6.8, (CH₃)₂CH); 1.32 (12H, d, *J*=6.8, (CH₃)₂CH). ¹³C-NMR (75 MHz, CDCl₃) δ: 165.52 (iPr₂NC=NH); 163.36 (d., *J*=250.4, *meta*-C₆H₃F₂); 163.20 (d., *J*=250.4, *meta*-C₆H₃F₂); 144.34 (t., *J*=8.5, *ipso*-C₆H₃F₂); 109.55 (dd, *J*=8.3, 17.3, *ortho-*C₆H₃F₂); 103.99 (t., *J*=25.2, *para*-C₆H₃F₂); 48,85 (CH₃)₂CH), 21.10 (CH₃)₂CH). ¹⁹F-NMR (282 MHz, CDCl₃) δ: -108.99 (2F, s., *meta*-C₆H₃F₂).

### Ligand F (2-(2,6-difluorophenyl)-2,3-dihydro-isoindol-1-ylideneamine)

A Schlenk tube was charged with 2,6-difluoroaniline (1.000 g, 5.10 mmol) dissolved in p-cymene (5 mL) and 2-(bromomethyl)benzonitrile (0.549 g, 5.10 mmol) under inert conditions and heated at 150 °C for 16 hours. The resulting powder was washed with toluene (3 x 5 mL), and then with n-hexane (3 x 5 mL), and dried *in vacuo* yielding 1.58 g of the hydrobromide salt of the ligand (95.3 %).
¹H NMR (300 MHz, DMSO-d⁶, R.T.); δ 10.78 (s, 1 H, NH), 9.96 (s, 1 H, NH), 8.51 (d, *J* = 7.8 Hz, 1 H, CHC(C=NH₂⁺Br⁻)), 7.93 (m, *J* = 7.2 Hz, 1 H, Ar-H), 7.80 (d, *J* = 7.3 Hz, 1 H, NCH₂CCH), 7.75 (dd, *J* = 8.5 Hz, 2H, HC(CF)₂), 7.50 (dd, *J* = 8.5 Hz, 2H, N(CCFCH)₂), 5.33 (s, 2H, CH₂). ¹⁹F NMR (282 MHz, DMSO-d⁶, R.T.); δ -118.05.

The neutral protio ligand K was obtained by neutralization of a dichloromethane solution the hydrobromide salt using 4 M NaOH (aq)), removal of the aqueous phase and evaporation of the volatiles under reduced pressure.

**Ligand G** (2-(2,6-dimethylphenyl)-2,3-dihydro-isoindol-1-ylideneamine) was prepared as described in WO 2005090418A1.

### Ligand H (2-(tert-butyl)-2,3-dihydro-isoindol-1-ylideneamine)

To a solution of 2-(bromomethyl)benzonitrile (4.97g, 25.35mmol) in toluene (100mL, SPS system) was added terbutylamine (2.69mL, 25.35mmol, 1 equiv.) at ambient temperature. Mixture is heated to toluene reflux for 60hours. Conversion was followed by NMR of the crude mixture, after 29 hours 1 H spectrum showed 60 % excess of 2-(bromomethyl)benzonitrile so terbutylamine (1.62mL, 15.31mL) was added. After 60 hours the mixture was filtered, washed with toluene and dried under reduced pressure giving 5.064g (75%) of pure product. Product appeared as a pink powder.

The neutral protio ligand A was obtained by neutralization of a diethylether solution the hydrobromide salt using 4 M NaOH (aq)), removal of the aqueous phase and evaporation of the volatiles under reduced pressure.

### Ligand I (2-(phenyl)-2,3-dihydro-isoindol-1-ylideneamine)

A Schlenk tube was charged with aniline (5.000 g, 53.69 mmol) dissolved in p-cymene (50 mL) and 2-(bromomethyl)benzonitrile (10.526 g, 53.69 mmol) under inert conditions. This was left stirring at 150 °C for 16 hours. The p-cymene was removed from the resulting white powder by filtration. The powder was washed with 3 x ∼50 mL toluene, and then with n-hexanes (3×50 mL), using a filter cannula, and remaining n-hexane was removed *in vacuo,* yielding 14.33 g of the hydrobromide salt of the ligand (92.3%). ¹H NMR (300 MHz, DMSO-d⁶, R.T.); δ 10.20 (s, 1H, NH), 9.20 (s, 1H, NH), 8.46 (d, *J* = 7.8 Hz, 1 H, CHC(C=NH₂⁺Br⁻)), 7.89 (m, *J* = 7.8 Hz, 1 H, Ar-H), 7.84 (d, *J* = 5.1 Hz, 1 H, NCH₂CCH), 7.79-7.62 (m, 5H, Ar-H), 5.35 (s, 2H, CH₂).

The neutral protio ligand A was obtained by neutralization of a diethylether solution the hydrobromide salt using 4 M NaOH (aq)), removal of the aqueous phase and evaporation of the volatiles under reduced pressure.

### Ligand J (2-(cyclooctyl)-2,3-dihydro-isoindol-1-ylideneamine)

To a flask under inert atmosphere containing 2-(bromomethyl)benzonitrile (7.61 g, 38.82mmol) was added 10ml of toluene to control exothermicity and improve mixing. Cyclooctylamine (5.5mL, 39.42mmol, 1 equiv.) was added dropwise with a syringe through a septum while stirring at room temperature. Color of the solution goes from yellow to a white suspension. After 5 hours at room temperature reaction was stopped. Mixture was filtered off, yellow/white solid appears. The product was washed 4 times with 20mL of diethyl ether and dried on rotary evaporator giving 10.41g (83%) of pure product.

The neutral protio ligand A was obtained by neutralization of a diethylether solution the hydrobromide salt using 4 M NaOH (aq)), removal of the aqueous phase and evaporation of the volatiles under reduced pressure.

### Synthesis of metal precursors

**Compound P** Cp*TiCl₃ was bought from Boulder Scientific Company and used as received.

### General preparation compounds R,S,T,U,V,W,Z.

Compound **R,S,T,U,V,W,Z.** were prepared as follows:.

To a THF solution of 2,3,4,5-Tetramethyl-2-cyclopentenone was added one equivalent of a alkylmagnesium bromide solution and the resulting yellow solution was refluxed for 8 h. Following cooling of the solution to 0 degC, the reaction was quenched with 25 ml of HCl (1 M solution), warmed slowly to room temperature and stirred for a further 2 h.

After addition of Et₂O, the phases were separated and the organic phase was washed with water followed by brine. The combined aqueous phases were extracted with Et₂O and dried over Na₂SO₄. Removal of the volatiles under reduced pressure afforded the crude product as an orange oil. The compound was purified using column chromatography (silica gel ; n-hexanes).

To an hexane solution of the substituted cyclopentene, cooled to -78 degC, was added dropwise a solution of n-BuLi. The solution was then allowed to warm slowly to room temperature before being stirred for 16 h. The precipitated lithium salt was then collected by filtration, washed with hexanes and dried carefully under reduced pressure. The air-sensitive lithium salt was highly insoluble precluding characterization and was used subsequently without further purification.

To a THF solution of the lithium salt was added carefully TMSCl. The mixture was stirred at room temperature for 16 h. The volatiles were removed *in vacuo* and the resulting residue was extracted into hexanes. Removal of hexanes under reduced pressure afforded the desired product.

To a toluene solution of TMS substituted cyclopentadienyl compound was added a titanium tetrachloride solution. The mixture was stirred at room temperature for 48 h.

The product was extracted into toluene and the volatiles were subsequently removed *in vacuo.* The resulting solid was washed with hexane and dried under reduced pressure affording the final product.

**Compound R** Me4CpTiCl3 was prepared according to the procedure described in *General preparation compounds R, S, T, U, V, W,Z.*

**Compound S** Me4nBuCpTiCl3 was prepared according to the procedure described in *General preparation compounds R, S, T, U, V, W,Z.*

**Compound T** Me4iPrCpTiCl3 was prepared according to the procedure described in *General preparation compounds R, S, T, U, V, W,Z.*

**Compound U** Me4(Allyl)CpTiCl3 was prepared according to the procedure described in *General preparation compounds R, S, T, U, V, W,Z.*

**Compound V** Me4PhCpTiCl3 was prepared according to the procedure described in *General preparation compounds R, S, T, U, V, W,Z.*

**Compound W** Me4CyCpTiCl3 was prepared according to the procedure described in *General preparation compounds R, S, T, U, V, W,Z.*

**Compound Z** Me4Cp(Sec-Bu)TiCl3 was prepared according to the procedure described in *General preparation compounds R, S, T, U, V, W,Z.*

Compound VZ, **Me4PhCpTiCl2(NC(Ph)(n-allylamine), was prepared as described in** EP2902420**.**

### Part II - In situ catalyst formation

Catalysts were prepared in situ by employing a combinatorial approach using either CyTiCl₃ complexes (compounds P,R,S,T,U,V,W,Z) and an equivalent quantity of one of the protio ligands A-J. For the in situ-generated complexes presented in Table 1, the protio ligand (A-J) was first deprotonated with one equivalent of MeMgCl (3.0M in THF) in toluene for thirty minutes at room temperature before a toluene solution of metal precursor (P,R,S,T,U,V,W,Z, one molar equivalent) was added. The concentrations were adjusted such that the overall concentration of titanium in the final solution was 40 mM. The solutions were subsequently employed in polymerization reactions (Part III). In case of the control experiment (table 2) the metal precursors R,S,T,U,V,W,Z were not contacted with any ligands and used directly in polymerization.

### Part III - EPDM co-polymerizations using in situ-generated catalysts (Tables 1 and 2)

The polymerizations with the in situ-generated catalysts were carried out in 48 parallel pressure reactors (PPR48). The PPR reactor cells are fitted with a pre-weighed glass vial insert and a disposable stirring paddle. The reactors are sealed, tested with Nitrogen at 8.8 bar(130 psi) to ensure that leaks not higher than 7mbar min⁻¹0.1 psi min⁻¹ may occur. The reactor atmosphere is then purged three times with propene at 5.4 bar (80 psi), and 3.9 mL of toluene are added (toluene is purified by passing through MBraun SPS mixed bed columns), along with 200 mL of an ENB/MMAO-3A/BHT toluene solution with the following composition: ENB (Sigma Aldrich, used as received) 185 µmol (final reactor concentration is 34 mM), MMAO-3A (AKZO NOBEL, final reactor concentration 2mM) 50 mM and BHT (Sigma Aldrich, used as received, final reactor concentration 1 mM) 25 mM. The liquid reactants are injected into each cell through a valve. The reactors are heated at 40°C and the cells are pressurized with 3.4 bar (50psi) of propene (Linde Gas, further purified through Selexorb and BASF catalysts for Oxygen and moisture removal) for 5 minutes with a paddles stirring speed of 800 rpm. After pressure stabilization, the reactors are heated at the polymerization temperature (90°C) and then left to equilibrate for 30 minutes. The reactors are then pressurized with ethene until a final pressure of 8.8 bar (130 psi) is reached. The pre-catalyst and activator (Trityl Tetrakis(pentafluorophenyl)borate (TBF20)) toluene solutions (4 mM) are injected in to the cells preventing contact with a 50µL nitrogen gap in the dispensation needle. The ratio of B:Ti is set at 2. The pre-catalyst loading is adjusted such that mass transport limitations are not encountered. In the case of the control experiment (table 2), the pre-catalyst loading has been kept as high as 10 nmols.

The polymerization is run at constant temperature and ethene partial pressure for 5 minutes, then quenched with an oxygen/nitrogen mixture (2%Oxygen content v/v) at 3.4 bar (50 psi) overpressure. The reactors are cooled, vented and purged with N₂, in order to prevent the glove box pollution from the quenching gas. After purging with inert gas, the reactors are opened and the glass inserts are unloaded from the cells, transferred to the centrifuge/vacuum drying station (Genevac EZ-2 Plus) and the volatiles are removed under reduced pressure overnight. The polymer samples are then weighed on a Weighting Station unit and the polymer yields are recorded. The polymers were analysed for intrinsic viscosity (IV), Mw/Mn and composition (FT-IR). In the case of the control experiment of table 2, polymer yields were so low that the characterization resulted impossible to carry out.

The polymerization results of the combinations of compounds R,S,T,U,V,W,Z with ligands A-J are given in table 1.

The polymerization results of compounds R,S,T,U,V,W,Z in polymerization without contacting with ligands A-J are provided in table 2. As it is possible to see from the results of table 2, none of the compounds R,S,T,U,V,W,Z shows appreciable productivity (residual Ti > 25 ppm) under the same experimental conditions of table

**Table 1:**

| Example no. | Metal precursor | Ligand | Average Productivity¹ (ppmTi) | Number of polymerizations | Number of polymer characterization | Mw² (KDa) | Mw/Mn² | C2₂, wt% | ENB², Wt% |
|---|---|---|---|---|---|---|---|---|---|
| Comp* 1 | Compound P | Compound F | 1.7 | 5 | 6 | 3.47.E+05 | 2.4 | 22.4 | 4.6 |
| Comp* 2 | Compound P | Compound I | 1.6 | 6 | 6 | 3.38.E+05 | 2.4 | 25.3 | 4.8 |
| Comp* 3 | Compound P | compound A | 1.6 | 6 | 6 | 3.08.E+05 | 2.5 | 22.5 | 7.3 |
| Comp* 4 | Compound P | Compound J | 3.2 | 6 | 6 | 4.55.E+05 | 2.3 | 21.6 | 6.8 |
| Comp* 5 | Compound P | compound B | 1.1 | 6 | 6 | 3.62.E+05 | 2.2 | 28.6 | 6.3 |
| Comp* 6 | Compound P | compound D | 1.2 | 6 | 6 | 4.13.E+05 | 2.3 | 33.7 | 4.3 |
| Comp* 7 | Compound VZ | | 15.1 | 5 | 5 | 4.29E+05 | 1.9 | 23.9 | 4.1 |
| 8 | Compound R | Compound F | 2.3 | 6 | 6 | 4.25.E+05 | 2.0 | 22.1 | 4.7 |
| 9 | Compound R | Compound E | 1.3 | 5 | 4 | 4.35.E+05 | 2.0 | 31.5 | 6.9 |
| 10 | Compound R | Compound C | 5.9 | 6 | 6 | 5.81.E+05 | 2.0 | 23.5 | 7.0 |
| 11 | Compound R | Compound A | 1.5 | 6 | 6 | 4.46.E+05 | 1.9 | 31.6 | 8.5 |
| 12 | Compound R | Compound B | 0.9 | 5 | 4 | 4.07.E+05 | 2.0 | 32.7 | 6.8 |
| 13 | Compound R | Compound D | 1.3 | 6 | 6 | 4.80.E+05 | 1.9 | 34.6 | 6.9 |
| 14 | Compound S | Compound A | 1.6 | 6 | 6 | 6.05.E+05 | 1.8 | 30.3 | 5.7 |
| 15 | Compound S | Compound B | 1.3 | 6 | 6 | 4.13.E+05 | 1.9 | 27.8 | 3.8 |
| 16 | Compound S | Compound C | 12.5 | 6 | 6 | 6.56.E+05 | 1.8 | 22.2 | 4.7 |
| 17 | Compound S | Compound D | 3.5 | 6 | 6 | 6.20.E+05 | 1.7 | 27.3 | 3.5 |
| 18 | Compound S | Compound F | 2.7 | 6 | 6 | 4.11.E+05 | 1.9 | 22.9 | 3.4 |
| 19 | Compound S | Compound E | 2.1 | 6 | 6 | 4.10.E+05 | 1.9 | 32.8 | 3.5 |
| 20 | Compound T | Compound F | 3.3 | 6 | 6 | 3.96.E+05 | 2.1 | 22.1 | 2.9 |
| 21 | Compound T | Compound E | 3.8 | 6 | 6 | 3.41.E+05 | 2.1 | 32.3 | 3.0 |
| 22 | Compound T | Compound C | 4.7 | 6 | 6 | 5.39.E+05 | 2.0 | 25.8 | 4.4 |
| 23 | Compound T | Compound A | 2.8 | 6 | 6 | 5.59.E+05 | 2.0 | 31.1 | 4.6 |
| 24 | Compound T | Compound B | 5.7 | 6 | 6 | 5.43.E+05 | 2.0 | 34.1 | 3.4 |
| 25 | Compound T | Compound D | 2.4 | 6 | 6 | 3.56.E+05 | 2.0 | 33.3 | 3.4 |
| 26 | Compound V | Compound F | 1.8 | 6 | 6 | 4.61.E+05 | 1.9 | 21.8 | 3.4 |
| 27 | Compound V | Compound E | 1.9 | 6 | 5 | 4.51.E+05 | 1.9 | 30.0 | 3.6 |
| 28 | Compound V | Compound C | 4.3 | 6 | 6 | 5.37.E+05 | 1.9 | 26.2 | 4.3 |
| 29 | Compound V | Compound A | 1.5 | 6 | 6 | 5.08.E+05 | 2.0 | 28.9 | 5.2 |
| 30 | Compound V | Compound B | 2.5 | 6 | 6 | 4.19.E+05 | 1.9 | 31.0 | 4.0 |
| 31 | Compound V | Compound D | 1.2 | 6 | 5 | 4.18.E+05 | 1.9 | 32.0 | 4.1 |
| 32 | Compound W | Compound A | 2.0 | 6 | 6 | 5.20.E+05 | 2.2 | 25.0 | 4.3 |
| 33 | Compound W | Compound G | 1.9 | 6 | 5 | 4.61.E+05 | 2.1 | 24.3 | 3.2 |
| 34 | Compound T | Compound J | 9.4 | 6 | 6 | 6.72.E+05 | 2.1 | 24.2 | 2.9 |
| 35 | Compound T | Compound A | 3.2 | 6 | 6 | 6.28.E+05 | 2.1 | 29.1 | 4.4 |
| 36 | Compound T | Compound H | 4.3 | 6 | 6 | 4.14.E+05 | 2.1 | 23.1 | 2.2 |
| 37 | Compound T | Compound G | 1.8 | 6 | 6 | 4.03.E+05 | 2.1 | 21.8 | 3.1 |
| 38 | Compound U | Compound F | 3.8 | 4 | 4 | 6.61.E+05 | 2.1 | 20.1 | 3.1 |
| 39 | Compound U | Compound E | 4.2 | 6 | 6 | 4.89.E+05 | 2.2 | 29.9 | 3.2 |
| 40 | Compound U | Compound C | 7.0 | 6 | 6 | 8.80.E+05 | 2.2 | 21.2 | 4.5 |
| 41 | Compound U | Compound A | 2.3 | 6 | 6 | 8.18.E+05 | 2.0 | 28.6 | 5.1 |
| 42 | Compound U | Compound B | 1.7 | 6 | 5 | 4.98.E+05 | 2.1 | 31.6 | 3.9 |
| 43 | Compound U | Compound D | 2.4 | 5 | 4 | 6.60.E+05 | 2.0 | 32.2 | 3.8 |
| 44 | Compound Z | Compound F | 2.7 | 4 | 5 | 3.59.E+05 | 2.0 | 21.0 | 2.5 |
| 45 | Compound Z | Compound C | 3.0 | 6 | 6 | 4.03.E+05 | 2.0 | 25.6 | 3.7 |
| 46 | Compound Z | Compound A | 2.3 | 4 | 5 | 4.46.E+05 | 2.0 | 26.5 | 3.7 |
| 47 | Compound Z | Compound G | 1.4 | 4 | 4 | 4.33.E+05 | 2.0 | 24.6 | 2.8 |
| 48 | Compound Z | Compound B | 2.4 | 6 | 6 | 3.57.E+05 | 2.0 | 29.9 | 2.8 |
| 49 | Compound Z | Compound D | 2.3 | 5 | 6 | 4.32.E+05 | 2.0 | 32.9 | 2.9 |

| | | | | | | | | | |
|---|---|---|---|---|---|---|---|---|---|
| ¹⁾Average value determined from respective number of polymerizations. ²⁾Average value determined from number of analysed polymers. Comp* = Comparison example | | | | | | | | | |

**Table 2:**

| Example no. | Metal precursor | Ligand | Average Productivity¹ (ppmTi) | Average Polymer yield (mg) | Number of polymerizations |
|---|---|---|---|---|---|
| Comp.50 | Compound R | none | 67 | 7.2 | 6 |
| Comp.51 | Compound S | none | 83 | 5.2 | 6 |
| Comp.52 | Compound T | none | 88 | 5.5 | 6 |
| Comp.53 | Compound U | none | 70 | 7.4 | 6 |
| Comp.54 | Compound V | none | 100 | 4.8 | 6 |
| Comp.55 | Compound W | none | 82 | 5.9 | 6 |
| Comp.56 | Compound Z | none | 82 | 5.9 | 6 |

| | | | | | |
|---|---|---|---|---|---|
| ¹⁾Average value determined from respective number of polymerizations. Product characterization unavailable due to the low polymer yield. | | | | | |

From Table 1, the catalysts derived from precursor R,S,T,V,U give either higher molecular weight for the polymers produced or higher ENB incorporations or higher productivity in combination with a given ligand (A-J) than observed for the corresponding catalysts derived from precursor P and the compound VZ. Furthermore, it can be observed that the for metal complexes with R1 means C3-C10, in particular C3 the diene incorporation is substantially increased.

As it is possible to see from the control experiment of table 2, none of the precursors P,R,S,T,U,V,W,Z is active if used in polymerization at comparable conditions with respect to their combination with any given ligand (A-J).

## Claims

1. A metal complex of the formula (1)
CyLMZₚ (1),
wherein
M is a group 4 metal
Z is an anionic ligand,
p is number of 1 to 2, preferably 2,
Cy is a substituted cyclopentadienyl ligand that contains the substituents R1, R2 and 3 additional methyl groups, whereof two of the methyl groups, provided they are vicinal may optionally be exchanged by an anellated C₆-C₁₀ aromatic ring, wherein
R1 means H, halogen or a C3-C20 substituent
R2 means a C1-C20 substituent
L is an amidinate ligand of the formula (2) 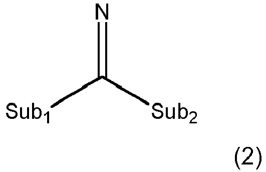 wherein the amidine-containing ligand is covalently bonded to the metal M via the imine nitrogen atom, and Sub1 is a substituent comprising a group 14 atom through which Sub1 is bonded to the imine carbon atom and Sub2 is a substituent comprising a heteroatom of group 15, through which Sub2 is bonded to the imine carbon atom or
L is an amidinate ligand of the formula 2b 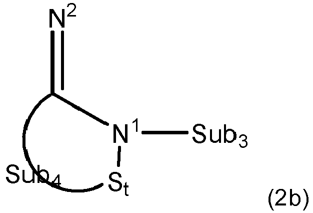 wherein the amidine-containing ligand is covalently bonded to the metal M via the imine nitrogen atom N²; S is a -CH₂- unit, and t is the integer number denoting the number of S and is in the range of 1-4, more preferably in the range of 1-2, most preferably is 1;
Sub3 is an alkyl, alkenyl, alkynyl with 4 to 20 carbon atoms or aromatic residue with 6 to 20 carbon atoms which are in each case unsubstituted or substituted with halogen, amido, silyl or aryl radicals;
Sub4 is an optionally substituted C2 unit in which the 2 carbon atoms may be sp² or sp³ hybridized.

2. The metal complex according to claim 1 wherein M is titanium.

3. The metal complex according to at least one of claim 1 to 2, wherein Z independently means a halogen atom, a C₁₋₁₀ alkyl group, a C₇₋₂₀ aralkyl group, a C₆₋₂₀ aryl group or a C₁₋₂₀ hydrocarbon-substituted amino group.

4. The metal complex according to at least one of claim 1 to 3, wherein Sub1 being a phenyl or substituted phenyl residue and Sub2 being an amino radical of the formula -NR⁴R⁵ with R⁴ and R⁵ being individually selected from the group of aliphatic hydrocarbyl, halogenated aliphatic hydrocarbyl, aromatic hydrocarbyl, halogenated aromatic hydrocarbonyl residues whereby R⁴ optionally forming a heterocyclic structure with R⁵.

5. A metal complex of formula (1) according to any one of the claims 1 to 4,
wherein
M is Ti,
Z is selected from the group consisting of chlorine and C₁-C₄-alkyl,
p is 2
Cy is substituted with four methyl groups one of which is from R2 = methyl and R1 means a hydrogen or a C₃-C₆ aliphatic substituent, in particular hydrogen, iso-propyl, cyclohexyl, n-butyl, s-butyl, iso-butyl, allyl or t-butyl and
L means N,N-diisopropylbenzamidinate or 2,6-difluoro-N,N-diisopropylbenzamidinate.

6. A process for the manufacturing of a metal complex of formula (1) according to at least one of the claims 1 to 5, wherein a metal complex of the formula (4)
CyMZₚ₊₁ (4)
wherein the radicals Cy, M, p and n have the meanings according to at least one of claims 1 to 6 and Z means halogen, in particular Cl, Br, or F, is reacted with an amidine of the formula LH or its hydrohalogen acid salt LH·HZ wherein L has the meaning according to at least one of claims 1 to 6 and Z means halogen, in particular Cl, Br, or F.

7. A catalyst system comprising
a) a metal complex of the formula (1) according to at least one of the claims 1 to 6,
b) an activator and
c) optionally a scavenger.

8. The catalyst system according to claim 7 wherein the scavenger c) is hydrocarbyl of a metal or metalloid of group 1-13 or its reaction products with at least one sterically hindered compound containing a group 15 or 16 atom.

9. The catalyst system according to claim 7 wherein the activator b) is a borane, a borate or an organoaluminum compound (E), preferably alkylaluminoxane.

10. A process for the preparation of a polymer by polymerizing at least one olefinic monomer comprising contacting said monomer with a metal complex according to claims 1 to 5 or a catalyst system according to at least one of the claims 7 to 9.

11. A process according to claim 10 wherein ethylene and at least a C₃-C₁₂-α-olefin is used as olefinic monomers.

12. A process according to at least one of claims 10 to 11 wherein ethylene, at least one C₃₋₁₂ alpha olefin and at least one non-conjugated diene, preferably selected from the group consisting of 5-methylene-2-norbornene 5-ethylidene-2-norbornene, 5-vinylnorbornene, 2,5-norbornadiene, dicyclopentadiene and vinylcyclohexene, in particular from the group consisting of 5-ethylidene-2-norbornene and 5-vinylnorbornene is used as olefinic monomers.

13. Polymers obtainable with the metal complex according to claim 1 or a catalyst system according to claim 7.
